# FASCICULE DE BREVET EUROPEEN

(11) **EP 3 442 864 B1**
(45) Date de publication et mention de la délivrance du brevet: **02.10.2019**
(21) Numéro de dépôt: 17758575.9
(22) Date de dépôt: 16.06.2017
(51) Int. Cl.: B64C 27/467, B64C 27/48

(54) **MANCHON DE PALE DE ROTOR D'UN AÉRONEF MUNI D'UNE PROTUBÉRANCE EN ZONE ARRIÈRE ET ROTOR MUNI D'UN TEL MANCHON**
MIT EINER PROTUBERANZ IM HINTEREN BEREICH AUSGESTATTETE FLUGZEUGROTORSCHAUFELHÜLSE UND MIT SOLCH EINER HÜLSE AUSGESTATTETER ROTOR
AIRCRAFT ROTOR BLADE SLEEVE PROVIDED WITH A PROTUBERANCE IN THE REAR REGION, AND ROTOR PROVIDED WITH SUCH A SLEEVE

(43) Date de publication de la demande: 20.02.2019
(73) Titulaire: Airbus Helicopters, 13725 Marignane Cedex (FR)
(72) Inventeur: DESVIGNE, Damien, 13090 Aix en Provence (FR); ALFANO, David, 13880 Velaux (FR)
(74) Mandataire: GPI & Associés
(86) Numéro de dépôt international: PCT/FR2017/000120
(87) Numéro de publication internationale: WO 2018/229349

(56) Documents cités:
- EP-A1- 0 048 799
- EP-A1- 2 657 130
- EP-A1- 2 778 051
- EP-A1- 2 806 156
- EP-A2- 2 772 431
- DE-C1- 3 704 552

## Description

La présente invention est du domaine des surfaces aérodynamiques et plus particulièrement des surfaces aérodynamiques formant une voilure tournante.

La présente invention concerne une enveloppe aérodynamique épaisse, tel un manchon de pale de rotor d'aéronef, munie d'une protubérance ainsi qu'un rotor muni d'une telle enveloppe aérodynamique épaisse. La présente invention concerne également un aéronef à voilure tournante.

Le projet menant à cette demande de brevet a reçu un financement du programme de recherche et d'innovation Horizon 2020 de l'Union européenne, dans le cadre de la convention de subvention CleanSky 2 N° « GAM-FRC-2014-001 Issue E ».

Un aéronef à voilure tournante comporte un fuselage portant un rotor principal. Ce fuselage se prolonge longitudinalement vers l'arrière par une poutre de queue susceptible de porter un ou plusieurs empennages permettant d'assurer une stabilité aérodynamique à l'aéronef ainsi qu'un rotor auxiliaire anticouple en lacet.

Chaque rotor comporte un moyeu tournant et plusieurs pales. Chaque pale est liée au moyeu et est entraînée en rotation par le moyeu. Ces pales en rotation décrivent sur un plan perpendiculaire à l'axe de rotation du moyeu un cercle communément appelé « disque rotor ».

Classiquement, une telle pale s'étend longitudinalement selon son envergure d'une première extrémité généralement désignée « pied de pale » et destinée à être fixée au moyeu vers une seconde extrémité libre. De la sorte, la pale s'étend radialement par rapport au rotor de la première extrémité vers la deuxième extrémité dans une direction longitudinale selon l'envergure de la pale. De plus, cette pale s'étend transversalement d'un bord d'attaque vers un bord de fuite de chaque profil de la pale, selon la corde du profil considéré.

Une pale est reliée au moyeu par un dispositif structurel de jonction qui peut être caréné afin de réduire en particulier sa traînée aérodynamique. Un tel dispositif structurel de jonction caréné est désigné généralement par le terme « manchon » ou bien le terme « manchette ». Le terme manchette est utilisé plus particulièrement dans le cas d'un rotor dit « rigide ».

Un aéronef à voilure tournante présente l'avantage de pouvoir évoluer aussi bien à des vitesses d'avancement élevées lors de vols de croisière qu'à de très faibles vitesses d'avancement et de réaliser également des vols stationnaires.

Lors de la rotation du rotor et en vol d'avancement de l'aéronef, une pale est dite « pale avançante » lorsqu'elle tourne en se déplaçant de l'arrière de l'aéronef vers l'avant de l'aéronef. A contrario, une pale est dite « pale reculante » lorsqu'elle tourne en se déplaçant de l'avant de l'aéronef vers l'arrière de l'aéronef.

Lors de vols stationnaires ou bien à faibles vitesses d'avancement, chaque pale, qu'elle soit avançante ou bien reculante, est balayée par un flux d'air sensiblement identique et généré principalement par la rotation du rotor et, par suite, par la rotation des pales. Ce flux d'air provoque l'apparition de forces aérodynamiques, notamment une force aérodynamique de portance permettant de sustenter l'aéronef.

Lors de vols d'avancement vers l'avant à des vitesses d'avancement plus élevées, chaque pale est balayée par deux flux d'air. D'une part, un premier flux d'air est généré par la rotation du rotor et d'autre part, un second flux d'air est généré par l'avancement de l'aéronef. Pour une pale avançante, ces deux flux d'air s'ajoutent alors que pour une pale reculante, ces deux flux d'air s'opposent. Ces deux flux d'air provoquent l'apparition de forces aérodynamiques, notamment une force aérodynamique de portance permettant de sustenter l'aéronef, voire de le propulser, ainsi qu'une force aérodynamique de traînée tendant à s'opposer à l'avancement de l'aéronef.

De plus, un rotor traversant le second flux d'air généré par l'avancement de l'aéronef provoque la production d'un sillage à l'arrière de ce rotor. Ce sillage peut présenter des instationnarités de fortes amplitudes ainsi qu'une signature fréquentielle de type harmonique, de type large-bande, ou bien la superposition des deux. Ces instationnarités sont dues notamment à la forme des éléments constituant la partie centrale du rotor, à savoir les manchons et le moyeu, à leurs interactions aérodynamiques avec les deux flux d'air, mais aussi à la rotation des pales et des manchons ainsi qu'à leurs orientations vis-à-vis du flux d'air variant lors de cette rotation, en particulier dans une zone particulière du disque rotor appelée « cercle d'inversion » par l'homme du métier.

Ces instationnarités, par leurs impacts sur les éléments de l'aéronef situés à l'arrière du rotor principal, et en particulier la poutre de queue et les empennages horizontaux ou verticaux de l'aéronef, ont pour conséquence notamment une réduction des qualités de vol de l'aéronef, les éléments situés à l'arrière du rotor principal étant alimentés avec de l'air fortement perturbé, ainsi que l'apparition de vibrations sur ces éléments, phénomène connu sous l'expression en langue anglaise « tail-shake ». Ces vibrations sont ensuite transmises à la cabine de l'aéronef par la structure de l'aéronef, générant de l'inconfort pour l'équipage, et pouvant également endommager des équipements embarqués.

Le cercle d'inversion est la zone dans laquelle la vitesse locale du premier flux d'air dû à la rotation de la pale est inférieure à la vitesse de translation du second flux d'air dû à l'avancement de l'aéronef. Ce cercle d'inversion est situé dans le secteur azimutal correspondant à une pale reculante, à proximité du moyeu du rotor. Ce cercle d'inversion impacte généralement le manchon, le pied de pale ainsi qu'une portion plus ou moins longue de la partie profilée de la pale, en fonction du rapport d'avancement, ce rapport d'avancement étant défini comme le rapport de la vitesse d'avancement de l'aéronef par la composante de vitesse à l'extrémité de la pale due à la rotation seule du rotor : plus le rapport d'avancement est élevé, plus le cercle d'inversion est grand en envergure et en azimut.

Dès lors, les éléments du rotor inclus dans le cercle d'inversion subissent, lors de leurs mouvements combinés de rotation autour du moyeu et de translation liés à l'avancement de l'aéronef, un vent incident les impactant par le bord de fuite dans le cercle d'inversion. En conséquence, la forme de ces éléments du rotor inclus dans le cercle d'inversion n'est généralement pas adaptée à ce vent incident inversé et leur comportement aérodynamique est alors dégradé. En particulier, un décollement du flux d'air apparaît sur ces éléments de même qu'une production d'un sillage du rotor et des instationnarités caractérisant ce sillage.

Ce phénomène est amplifié pour les hélicoptères hybrides comportant une ou plusieurs hélices propulsives permettant des grandes vitesses d'avancement. En effet, aux grandes vitesses d'avancement, la vitesse de rotation du rotor peut être réduite. Dès lors, le vent incident inversé impacte le bord de fuite de ces éléments du rotor inclus dans le cercle d'inversion avec une vitesse plus importante.

En dehors du cercle d'inversion, le vent incident impacte classiquement les éléments du rotor par le bord d'attaque provoquant un comportement aérodynamique attendu de ces éléments.

La partie profilée de la pale est généralement formée par une enveloppe aérodynamique dite « mince », dont l'épaisseur relative égale au rapport de l'épaisseur de l'enveloppe par sa corde est faible, par exemple inférieure ou égale à 12%. Le manchon est généralement formé par une enveloppe aérodynamique dite « épaisse », dont l'épaisseur relative est plus importante, par exemple comprise entre 25% et 150%. Le pied de pale constitue généralement une zone de transition entre une telle enveloppe aérodynamique mince et une telle enveloppe aérodynamique épaisse et peut à ce titre être formé au moins partiellement par une enveloppe aérodynamique épaisse.

En particulier, un manchon peut avoir une forme pseudo-elliptique épaisse, avec une épaisseur relative par exemple comprise entre 40% et 100% afin d'une part de permettre de caréner le dispositif structurel de jonction entre le pied de pale et le moyeu du rotor et d'autre part de s'adapter au mieux à la spécificité des écoulements des flux d'air qu'il est susceptible de rencontrer lors d'un vol d'avancement dans le cercle d'inversion, à savoir un flux d'air dirigé du bord d'attaque vers le bord de fuite sur un « manchon avançant » et un flux d'air inversé dirigé du bord de fuite vers le bord d'attaque sur un « manchon reculant ».

Une telle forme pseudo-elliptique épaisse n'a pas pour fonction principale de générer une force aérodynamique de portance, mais de limiter la traînée aérodynamique générée par un dispositif structurel de jonction, cette traînée aérodynamique pouvant typiquement être divisée par deux. Cependant, ces formes pseudo-elliptiques épaisses présentent des inconvénients, telles que l'apparition de décollements importants du flux d'air et d'instationnarités du sillage généré par le rotor. De plus, la trainée aérodynamique est certes diminuée par rapport à un dispositif structurel de jonction non caréné, mais reste significative, représentant par exemple jusqu'à 10% de la traînée aérodynamique totale générée par un aéronef à voilure tournante.

L'art antérieur comporte diverses solutions permettant d'améliorer le comportement aérodynamique d'une surface aérodynamique portante balayée par un flux d'air, telle qu'une pale ou bien une aile.

Par exemple, les documents EP 0724691 et US 6345791 décrivent des surfaces aérodynamiques comportant des formes en relief afin d'améliorer les caractéristiques aérodynamiques de cette surface et favoriser l'écoulement de l'air sur cette surface.

Le document EP 0724691 décrit notamment une pale comportant des vagues réparties le long de l'envergure de la pale, sur les peaux d'extrados et d'intrados, du bord d'attaque de la pale au bord de fuite. Ces vagues permettent de réduire le bruit provoqué par l'air balayant la pale et/ou la traînée aérodynamique générée par la pale.

Le document US 6345791 décrit une surface aérodynamique, telle une aile, munie de rides de faibles amplitudes et agencées parallèlement au flux d'air balayant la surface aérodynamique afin de réduire la traînée aérodynamique générée par la surface aérodynamique.

On connaît aussi le document US 2009/074578 qui décrit des pales équipées de tubercules sur leurs bords d'attaque, sur toute ou partie de l'envergure des pales. Ces pales s'inspirent des nageoires d'une baleine à bosses qui comportent également des tubercules. La présence de ces tubercules permet d'améliorer la stabilité de ces pales et de réduire l'apparition de bruit ainsi que d'atteindre des angles de décrochage importants de l'ordre de 30 degrés (30°). Selon un test conduit par l'Institut canadien de l'énergie éolienne, la présence de ces tubercules permet également une réduction de la traînée aérodynamique des pales et une augmentation de leur portance aboutissant par exemple à un gain de production d'énergie de l'ordre de 20% pour une éolienne équipée de telles pales, comme indiqué à l'adresse internet : http://www.cleantechrepublic.com/2009/03/06/des-pales-en-forme-de-nageoire-de-baleine-pour-doper-la-performance-dune-eolienne/. De telles tubercules peuvent aussi équiper une aile et/ou une hélice d'avion, une hélice d'un navire ou encore une pale d'un rotor d'aéronef comme précisé à l'adresse internet http://peswiki.com/index.php/Directory:WhalePower Corp.

En outre, les documents EP 0615903 et EP 1112928 décrivent des surfaces aérodynamiques comportant un dispositif de déviation de l'écoulement agencé au bord de fuite de cette surface aérodynamique modifiant ainsi la forme de ce bord de fuite. En particulier, selon le document EP 0615903, ce dispositif de déviation de l'écoulement est agencé sur la peau d'intrados de la pale et permet en particulier de dévier la couche limite de l'écoulement. De la sorte, ce dispositif de déviation de l'écoulement permet de limiter le décrochage dynamique de la surface aérodynamique soumise à un angle d'incidence important. Ce dispositif de déviation de l'écoulement n'a par contre aucune influence sur son comportement aérodynamique à de faibles angles d'incidence.

On connaît enfin le document EP 2806156 qui décrit une pale d'éolienne comportant un appendice aérodynamique agencé en bord de fuite afin de diminuer le bruit généré par cette pale. Cet appendice aérodynamique comporte notamment deux surfaces concaves reliées respectivement à la peau d'intrados et à la peau d'extrados de la pale et se rejoignant pour former une arête vive.

Ces diverses solutions s'appliquent à une aile fixe ou bien à une pale tournante, mais dans tous les cas, ces solutions sont décrites uniquement dans le cadre d'une application à des surfaces aérodynamiques minces. Toutes ces solutions ont pour but d'améliorer notamment les caractéristiques aérodynamiques et/ou de diminuer le cas échéant le bruit généré en détournant ou en contrant les perturbations aérodynamiques générées au bord d'attaque ou bien au bord de fuite.

Cependant, ces solutions s'appliquent toujours pour un flux d'air balayant une surface aérodynamique du bord d'attaque vers le bord de fuite. Aucune de ces solutions n'a pour but de favoriser la pénétration d'une surface aérodynamique dans un flux d'air inversé balayant cette surface aérodynamique du bord de fuite vers le bord d'attaque.

Au contraire, dans un tel flux d'air inversé, ces solutions peuvent représenter un frein à la pénétration dans l'air de la surface aérodynamique, par exemple dans le cas d'une pale équipée de tubercules au bord d'attaque ou bien d'un appendice aérodynamique agencé au bord de fuite, et augmenter de fait la trainée aérodynamiques de la surface aérodynamique.

De plus, dans le cas d'une pale tournante, aucune solution n'est appliquée dans la partie centrale d'un rotor, à savoir dans le cercle d'inversion, par exemple au niveau d'un manchon de pale.

La présente invention a pour but de s'affranchir des limitations mentionnées ci-dessus et de limiter les dégradations aérodynamiques générées par un rotor d'un aéronef lors de vols d'avancement, notamment en réduisant la traînée aérodynamique de ce rotor et en limitant la production d'un sillage.

L'invention concerne une enveloppe aérodynamique épaisse destinée à relier une pale à un moyeu d'un rotor et permettant de réduire les décollements du flux d'air, la traînée aérodynamique et la production d'un sillage aussi bien du côté avançant que reculant de cette enveloppe aérodynamique épaisse.

L'invention concerne également un rotor destiné à un aéronef ainsi qu'un aéronef à voilure tournante.

La présente invention a alors pour objet une enveloppe aérodynamique épaisse destinée à être relié à un moyeu tournant d'un aéronef, l'enveloppe aérodynamique épaisse s'étendant d'une part selon une direction longitudinale X en envergure d'une première zone extrémale vers une seconde zone extrémale et d'autre part selon une direction transversale Y entre deux bords transversaux, les deux bords transversaux étant un bord d'attaque et un bord de fuite, l'enveloppe aérodynamique épaisse comportant une première surface d'extrados et une première surface d'intrados.

La direction transversale Y est de préférence perpendiculaire à la direction longitudinale X. Une direction d'élévation Z est définie perpendiculairement aux directions longitudinale X et transversale Y afin de former un repère orthogonal direct (X,Y,Z). Un plan transversal Pyz perpendiculaire à la direction longitudinale X est également défini par les directions transversale Y et d'élévation Z.

L'enveloppe aérodynamique épaisse est formée par une succession de premiers profils situés dans des plans parallèles au plan transversal Pyz. Chaque premier profil est défini dimensionnellement notamment par une épaisseur *h* égale à une distance maximale entre la première surface d'extrados et la première surface d'intrados.

L'enveloppe aérodynamique épaisse est défini également par une première longueur *L* égale à une distance entre la première zone extrémale et la seconde zone extrémale selon la direction longitudinale X.

L'enveloppe aérodynamique épaisse selon l'invention est remarquable en ce qu'elle comporte au moins une protubérance agencée sur au moins un des bords transversaux de l'enveloppe aérodynamique épaisse, chaque protubérance étant solidaire de l'enveloppe aérodynamique épaisse, chaque protubérance comportant une seconde surface d'extrados et une seconde surface d'intrados, chaque protubérance s'étendant transversalement du bord transversal sur lequel la protubérance est agencée à une extrémité transversale de la protubérance où se rejoignent la seconde surface d'extrados et la seconde surface d'intrados, chaque protubérance étant configurée afin d'améliorer le comportement aérodynamique de l'enveloppe aérodynamique épaisse aussi bien lorsque l'enveloppe aérodynamique épaisse impacte un flux d'air avec le bord d'attaque qu'avec le bord de fuite. Chaque protubérance est formée par une succession de seconds profils situés dans des plans parallèles au plan transversal Pyz, chaque second profil étant défini dimensionnellement par :
- une hauteur *h'* égale à une distance entre la seconde surface d'extrados et la seconde surface d'intrados, la hauteur *h'* étant comprise entre 0.2 et 0.6 fois l'épaisseur *h* de l'enveloppe aérodynamique épaisse,
- une largeur *l*' égale à une distance entre le premier profil et l'extrémité transversale de la protubérance selon la direction transversale Y, la largeur *l*' étant comprise entre 0.5 et 2 fois la hauteur *h'* de la protubérance,

- des rayons de raccordement non nuls entre le premier profil de l'enveloppe aérodynamique épaisse et le second profil de la protubérance, et
- un rayon de courbure de l'extrémité transversale de la protubérance entre la seconde surface d'extrados et la seconde surface d'intrados supérieur à un rayon minimum *Rₘᵢₙᵢ*.

La protubérance est définie également par une seconde longueur *L'* égale à une distance entre une troisième zone extrémale et une quatrième zone extrémale de la protubérance selon la direction longitudinale X, la seconde longueur *L'* étant comprise entre 0.5 et une fois la première longueur *L* de l'enveloppe aérodynamique épaisse.

L'enveloppe aérodynamique épaisse selon l'invention est particulièrement destinée à relier une pale à un moyeu tournant d'un aéronef. Le moyeu tournant forme ainsi avec chaque enveloppe aérodynamique épaisse reliée au moyeu et avec chaque pale reliée à une enveloppe aérodynamique épaisse un rotor d'un aéronef. Ce rotor peut être un rotor principal assurant la sustentation, voire la propulsion, d'un aéronef à voilure tournante. Ce rotor peut aussi être un rotor auxiliaire anticouple d'un aéronef à voilure tournante. Ce rotor peut également être un rotor de propulsion équipant un aéronef.

L'enveloppe aérodynamique épaisse selon l'invention est par exemple un carénage aérodynamique d'un dispositif structurel de jonction reliant une telle pale à un moyeu tournant d'un aéronef. L'enveloppe aérodynamique épaisse selon l'invention peut également être un tel dispositif structurel de jonction caréné. L'enveloppe aérodynamique épaisse selon l'invention est par exemple un manchon ou bien une manchette d'un rotor d'aéronef.

L'enveloppe aérodynamique épaisse selon l'invention peut également être un pied de pale lié par un dispositif structurel de jonction au moyeu tournant d'un aéronef.

L'épaisseur *h* d'un premier profil de l'enveloppe aérodynamique épaisse et la hauteur *h'* d'un second profil de la protubérance sont de préférence définies selon la direction d'élévation Z.

Chaque premier profil de l'enveloppe aérodynamique épaisse est également définie dimensionnellement par :
- une corde *l* égale à une distance maximale entre le bord d'attaque et le bord de fuite, et
- une épaisseur relative égale au rapport de l'épaisseur *h* par la corde *l*.

Dans le cadre de l'invention, l'épaisseur relative de l'enveloppe aérodynamique épaisse est de préférence comprise entre 40% et 100%.

Parmi les enveloppes aérodynamiques épaisses, on peut distinguer des enveloppes aérodynamiques épaisses dit « courtes » et des enveloppes aérodynamiques épaisses dit « longues » selon la direction longitudinales X en envergure. Par exemple, une enveloppe aérodynamique épaisse est considérée courte pour une première longueur *L* inférieure ou égale à 150% de la corde *l* et longue pour une première longueur *L* supérieure à 150% de la corde *l*.

De préférence, pour une enveloppe aérodynamique épaisse courte, la seconde longueur *L'* de la protubérance est égale à la première longueur *L* de l'enveloppe aérodynamique épaisse afin que la protubérance ait une seconde longueur *L'* suffisante pour agir de façon significative sur le flux d'air balayant l'enveloppe aérodynamique épaisse.

Pour une enveloppe aérodynamique épaisse longue, la seconde longueur *L'* de la protubérance est de préférence comprise entre 0.7 et une fois la première longueur *L* de l'enveloppe aérodynamique épaisse.

Lorsque la seconde longueur *L'* est strictement inférieure à la première longueur *L*, le raccordement entre l'extrémité transversale de la protubérance et les premières surfaces d'extrados et d'intrados de l'enveloppe aérodynamique épaisse est de préférence progressif avec par exemple une pente et des rayons de raccordement non nuls.

Par ailleurs, la largeur *l*' de la protubérance peut être variable selon une loi de variation en envergure. De la sorte, la largeur *l*' varie pour chaque plan parallèle au plan transversal Pyz en fonction de sa position en envergure selon la direction longitudinale X. De même, la hauteur *h'* peut également être variable selon une loi de variation en envergure. De telles variations de la largeur *l*' et/ou de la hauteur *h'* de la protubérance permettent d'adapter au mieux la forme de la protubérance à la vitesse locale de l'écoulement d'air sur l'enveloppe aérodynamique épaisse. De telles variations de la largeur *l*' et/ou de la hauteur *h'* sont de préférence applicables pour des enveloppes aérodynamiques épaisses longues.

Une protubérance est agencée de préférence sur le bord de fuite de l'enveloppe aérodynamique épaisse. La présence de cette protubérance permet d'affiner le bord de fuite épais de l'enveloppe aérodynamique épaisse, et de réduire avantageusement, pour une enveloppe aérodynamique épaisse avançante lors de sa rotation, les décollements du flux d'air. De la sorte, la présence de cette protubérance permet de réduire la traînée aérodynamique et la production d'un sillage ainsi que de limiter l'amplitude des instationnarités contenues dans ce sillage et la signature fréquentielle de ce sillage.

La présence de cette protubérance permet également et de façon non intuitive d'améliorer le comportement aérodynamique de l'enveloppe aérodynamique épaisse reculante lors de sa rotation. En effet, la protubérance impacte alors le flux d'air en premier et permet d'améliorer la pénétration dans le flux d'air de l'enveloppe aérodynamique épaisse par rapport à une enveloppe aérodynamique épaisse non équipée de la protubérance. Par suite, la protubérance permet de limiter le décollement du flux d'air sur l'enveloppe aérodynamique épaisse et, de fait, de réduire la traînée aérodynamique et la production d'un sillage ainsi que l'amplitude des instationnarités contenues dans ce sillage et la signature fréquentielle de ce sillage.

La réduction de la trainée aérodynamique est par exemple de l'ordre de 10% par rapport à une enveloppe aérodynamique épaisse non équipée de la protubérance. De plus, la taille des tourbillons générés au niveau d'une enveloppe aérodynamique épaisse est significativement réduite, par exemple de l'ordre de 20% pour une enveloppe aérodynamique épaisse avançante et de l'ordre de 50% pour une enveloppe aérodynamique épaisse reculante. Les gains les plus importants sur la production d'un sillage sont obtenus sur le secteur « reculant » du rotor.

Toutefois, une protubérance peut également être agencée uniquement sur le bord d'attaque de l'enveloppe aérodynamique épaisse. Là encore, la protubérance impactant en premier le flux d'air dans le cas d'une enveloppe aérodynamique épaisse avançante permet d'améliorer la pénétration dans le flux d'air de l'enveloppe aérodynamique épaisse et, par suite, de limiter le décollement du flux d'air sur l'enveloppe aérodynamique épaisse et, en conséquence, de réduire la traînée aérodynamique et la production d'un sillage. Dans le cas d'une enveloppe aérodynamique épaisse reculante, la présence de la protubérance permet également de réduire la traînée aérodynamique et la production d'un sillage. Dans les deux cas, cette protubérance permet de réduire l'amplitude des instationnarités contenues dans ce sillage et la signature fréquentielle du sillage.

On peut noter que plus l'enveloppe aérodynamique épaisse est épaisse, plus la présence d'une protubérance sur le bord d'attaque a des effets positifs sur la réduction de la traînée aérodynamique et de la production d'un sillage. En effet, le bord d'attaque tend à devenir très « droit » pour une enveloppe aérodynamique très épaisse.

De même, une première protubérance peut être agencée sur le bord de fuite de l'enveloppe aérodynamique épaisse et une deuxième protubérance peut être agencée sur le bord d'attaque de l'enveloppe aérodynamique épaisse. Une protubérance impactant alors le flux d'air en premier que l'enveloppe aérodynamique épaisse soit avançante ou reculante, le décollement du flux d'air sur l'enveloppe aérodynamique épaisse est limité. Par suite, la traînée aérodynamique et la production d'un sillage sont réduites, de même que l'amplitude des instationnarités contenues dans ce sillage et la signature fréquentielle du sillage.

Par ailleurs, plusieurs protubérances peuvent être agencées sur un même bord transversal de l'enveloppe aérodynamique épaisse, en particulier pour une enveloppe aérodynamique épaisse longue.

L'enveloppe aérodynamique épaisse et chaque protubérance peuvent former une pièce unique de sorte que les premières surfaces d'extrados et d'intrados et les secondes surfaces d'extrados et d'intrados forment une seule et même enveloppe.

Chaque protubérance peut également être un élément rapporté sur l'enveloppe aérodynamique épaisse. Chaque protubérance est par exemple collée sur l'enveloppe aérodynamique épaisse. Chaque protubérance peut également être vissée et/ou rivetée sur l'enveloppe aérodynamique épaisse. Tout autre moyen de fixation de chaque protubérance sur l'enveloppe aérodynamique épaisse permettant une liaison rigide entre l'enveloppe aérodynamique épaisse et chaque protubérance peut être utilisé.

Dans ces deux cas, l'enveloppe aérodynamique épaisse et la protubérance sont de préférence réalisés en matériaux composites.

De plus, aucun passage d'air ne sépare de préférence l'enveloppe aérodynamique épaisse et la protubérance. De la sorte, la seconde surface d'extrados est reliée à la première surface d'extrados et la seconde surface d'intrados est reliée à et la première surface d'intrados de façon continue. En conséquence, le flux d'air balayant l'enveloppe aérodynamique épaisse circule de façon continue sur chaque première surface d'extrados et d'intrados de l'enveloppe aérodynamique épaisse et chaque seconde surface d'extrados et d'intrados de chaque protubérance, limitant avantageusement l'apparition de turbulences sur le flux d'air et, par suite, réduisant la traînée aérodynamique et la production d'un sillage.

De même, afin de permettre une circulation continue et minimisant les turbulences du flux d'air balayant chaque première surface d'extrados et d'intrados et chaque seconde surface d'extrados et d'intrados, des rayons de raccordement sont agencés entre chaque premier profil de l'enveloppe aérodynamique épaisse et chaque second profil de chaque protubérance. De préférence, ces rayons de raccordement sont supérieurs ou égaux à 25% de la hauteur h' de la protubérance. Ces rayons de raccordement sont également définis de préférence de sorte qu'une continuité en tangence soit assurée entre chaque second profil de la protubérance et chaque premier profil de l'enveloppe aérodynamique épaisse.

Le bord transversal, sur lequel est agencée la protubérance, comporte également des rayons de raccordement avec respectivement la première surface d'extrados et la première surface d'intrados de l'enveloppe aérodynamique épaisse.

Par ailleurs, au niveau de l'extrémité transversale de chaque protubérance, le rayon minimum *Rₘᵢₙᵢ* reliant la seconde surface d'extrados et la seconde surface d'intrados de la protubérance est de préférence supérieur ou égal à 15% de la hauteur *h'* de la protubérance. Le rayon minimum *Rₘᵢₙᵢ* est de préférence inférieur aux rayons de raccordement entre chaque premier profil et chaque second profil de sorte que la protubérance est définie avec une base assez large et une extrémité transversale plus affinée.

La protubérance a de préférence une forme s'amincissant depuis les premières surfaces d'extrados et d'intrados vers l'extrémité transversale de la protubérance afin de réduire le décollement du flux d'air et la trainée aérodynamique pour une enveloppe aérodynamique épaisse reculante et de réduire la production d'un sillage pour une enveloppe aérodynamique épaisse avançante. En conséquence, la hauteur *h'* de la protubérance se situe entre deux points de jonction, un premier point de jonction étant défini entre la première surface d'extrados et la seconde surface d'extrados, un second point de jonction étant défini entre la première surface d'intrados et la seconde surface d'intrados.

De plus, la seconde surface d'extrados et la seconde surface d'intrados ne comportent aucune discontinuité en tangence. Dès lors, chaque second profil est continu et sa pente varie de façon continue. De fait, la seconde surface d'extrados et la seconde surface d'intrados de chaque protubérance comportent généralement un point d'inflexion entre les premières surfaces d'extrados et d'intrados et l'extrémité transversale.

Par ailleurs, une protubérance peut être orientée de différentes façons vis-à-vis du bord transversal sur lequel elle est agencée et/ou vis-à-vis de la direction transversale Y.

Par exemple, la protubérance est agencée sensiblement perpendiculairement au bord transversal sur lequel est agencée la protubérance. De fait, dans chaque plan parallèle au plan transversal Pyz, chaque second profil de la protubérance est agencé perpendiculairement à une droite reliant les deux points de jonction entre d'une part la première et la seconde surface d'extrados et d'autre part la première et la seconde surface d'intrados.

Selon un autre exemple, la protubérance est inclinée par rapport à une direction sensiblement perpendiculaire au bord transversal sur lequel est agencée la protubérance. De fait, dans chaque plan parallèle au plan transversal Pyz, chaque second profil est agencé de sorte à ne pas être perpendiculaire à une droite reliant ces deux points de jonction.

Par ailleurs, chaque protubérance peut comporter un plan de symétrie. De fait, dans chaque plan parallèle au plan transversal Pyz, chaque second profil de chaque protubérance comporte un axe de symétrie. Cet axe de symétrie est par exemple la direction transversal Y dans le cas particulier où la protubérance est agencée perpendiculairement au bord transversal, ce bord transversal étant lui-même perpendiculaire à la direction transversal Y.

La présente invention a aussi pour objet un rotor d'un aéronef, le rotor étant muni d'un moyeu, d'au moins deux pales, et d'enveloppes aérodynamiques épaisses telles que précédemment décrites. Chaque enveloppe aérodynamique épaisse relie respectivement une pale au moyeu. Chaque protubérance est alors configurée de sorte à réduire la traînée aérodynamique et la production d'un sillage du rotor ainsi qu'à limiter l'amplitude des instationnarités caractérisant ce sillage et réduire sa signature fréquentielle.

En conséquence, les interactions aérodynamiques de ce sillage avec les éléments situés à l'arrière de ce rotor, tels que la poutre de queue, le rotor auxiliaire et des empennages horizontaux ou verticaux, sont réduites, contribuant à améliorer leur efficacité aérodynamique et plus généralement à améliorer les qualités de vol de l'aéronef.

Ce rotor peut être un rotor principal ou bien être un rotor auxiliaire anticouple d'un aéronef à voilure tournante. Ce rotor peut aussi être un rotor de propulsion équipant un aéronef.

La présente invention a aussi pour objet un aéronef à voilure tournante comportant un fuselage, une poutre de queue, éventuellement au moins un empennage horizontal et/ou vertical et au moins un rotor tel que précédemment décrit. Chaque protubérance est configurée de sorte d'une part à réduire la production d'un sillage du rotor et les instationnarités caractérisant ce sillage et d'autre part à limiter une excitation fréquentielle et l'apparition de vibrations des éléments de l'aéronef situés à l'arrière du rotor, en particulier la poutre de queue.

L'invention et ses avantages apparaîtront avec plus de détails dans le cadre de la description qui suit avec des exemples de réalisation donnés à titre illustratif en référence aux figures annexées qui représentent :
- la figure 1, un aéronef muni d'un rotor,
- les figures 2 et 3, des vues partielles d'un rotor,
- la figure 4, une vue en perspective d'un manchon de pale selon l'art antérieur,
- la figure 5, une vue en perspective d'une enveloppe aérodynamique épaisse selon l'invention, et
- les figures 6 à 8, des vues transversales d'enveloppes aérodynamiques épaisses.

Les éléments présents dans plusieurs figures distinctes sont affectés d'une seule et même référence.

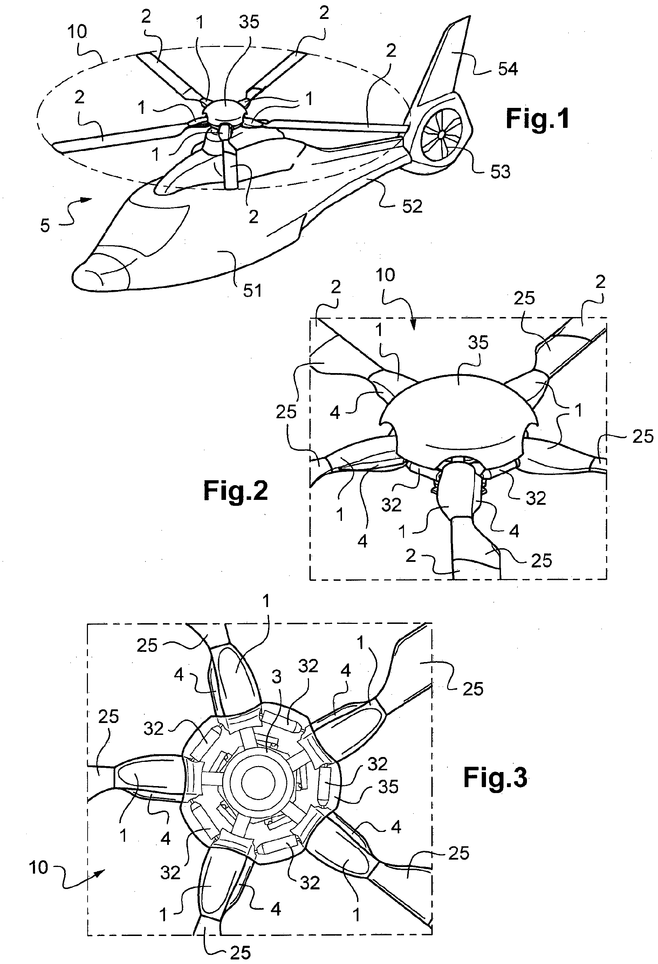

La figure 1 représente un aéronef à voilure tournante 5 comportant un fuselage 51, un rotor principal 10 et une poutre de queue 52 supportant un rotor auxiliaire 53 anticouple en lacet et un empennage vertical 54. Le rotor 10 comporte un moyeu 3, cinq pales 2 et cinq manchons 1 ainsi qu'une coupole 35 et des amortisseurs 32 interpales. La coupole 35 assure une protection et un carénage de la tête du rotor 10.

Les figures 2 et 3 représentent la partie centrale du rotor 10, l'extrémité libre de chaque pale 2 étant tronquée. Seul le pied de pale 25 de chaque pale 2 est visible sur ces figures. Sur la figure 3, la coupole 35 est représentée de façon transparente permettant une vision du moyeu 3 et des amortisseurs 32.

Chaque pale 2 est susceptible de générer une force de portance lors de la rotation du rotor 10 afin de sustenter et de propulser l'aéronef 5. Chaque manchon 1 est une enveloppe aérodynamique épaisse assurant le carénage aérodynamique d'un dispositif structurel de jonction (non représenté) reliant une pale 2, et plus précisément le pied de pale 25 au moyeu 3 du rotor 10.

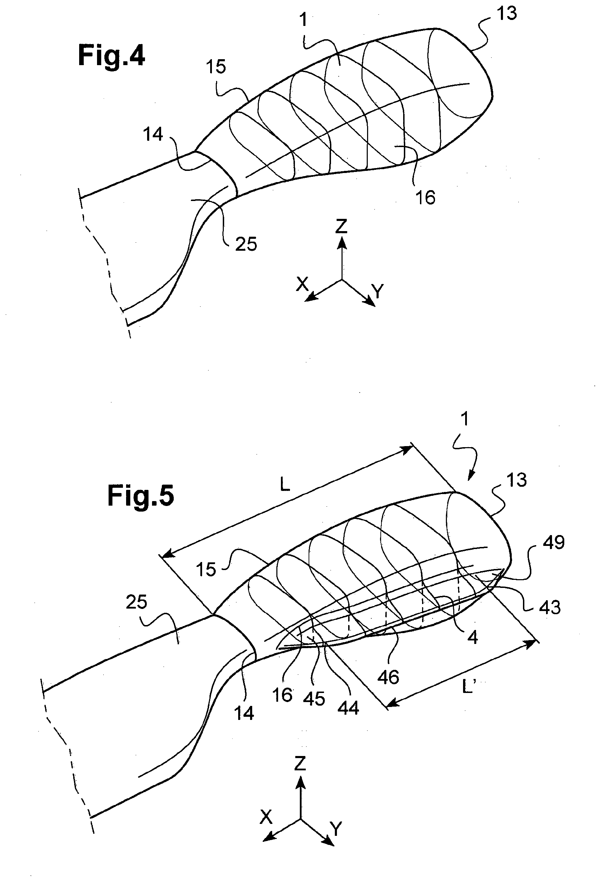

Une enveloppe aérodynamique épaisse 1 équipée d'une protubérance 4 selon l'invention est représentée en perspective sur la figure 5 avec le pied de pale 25 et la figure 4 représente une enveloppe aérodynamique épaisse 1 assurant le carénage aérodynamique d'un manchon de pale selon l'art antérieur.

Chaque pale 2 et chaque enveloppe aérodynamique épaisse 1 s'étendent en envergure selon une direction longitudinale X. Une direction transversale Y est perpendiculaire à la direction longitudinale X et une direction d'élévation Z est définie perpendiculairement aux directions longitudinale X et transversale Y afin de former un repère orthogonal direct (X,Y,Z). Un plan transversal Pyz perpendiculaire à la direction longitudinale X est également défini par les directions transversale Y et d'élévation Z.

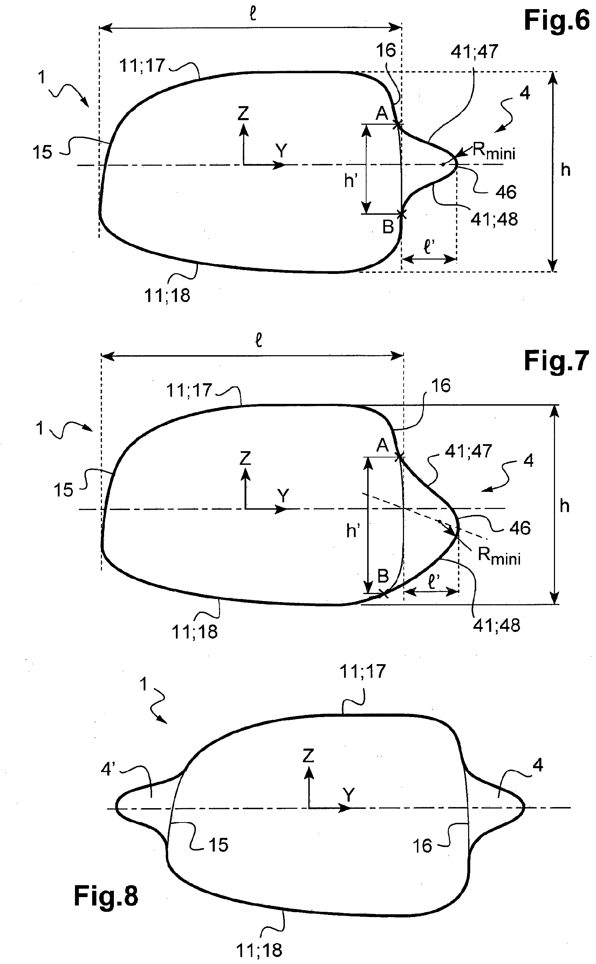

Les figures 6 à 8 représentent des sections transversales parallèlement au plan transversal Pyz d'exemples de réalisations d'enveloppes aérodynamiques épaisses 1 équipées d'une ou deux protubérances 4.

L'enveloppe aérodynamique épaisse 1 s'étend d'une part selon la direction longitudinale X en envergure d'une première zone extrémale 13 située côté moyeu 3 vers une seconde zone extrémale 14 située côté pied de pale 25 et d'autre part selon la direction transversale Y entre un bord d'attaque 15 et un bord de fuite 16. L'enveloppe aérodynamique épaisse 1 comporte une première surface d'extrados 17 et une première surface d'intrados 18.

Un premier profil 11 de l'enveloppe aérodynamique épaisse 1 est défini dans chaque plan parallèle au plan transversal Pyz par :
- une corde *l* égale à une distance maximale entre le bord d'attaque 15 et le bord de fuite 16,
- une épaisseur *h* égale à une distance maximale entre la première surface d'extrados 17 et la première surface d'intrados 18 selon la direction d'élévation Z, et
- une épaisseur relative égale au rapport de l'épaisseur *h* par la corde *l* et comprise par exemple entre 40% et 100%.

L'enveloppe aérodynamique épaisse 1 est également définie par une première longueur *L* égale à une distance entre la première zone extrémale 13 et la seconde zone extrémale 14 selon la direction longitudinale X en envergure.

L'enveloppe aérodynamique épaisse 1 selon l'invention comporte au moins une protubérance 4 visible sur les figures 2, 3 et 5 à 8. Chaque protubérance 4 comporte une seconde surface d'extrados 47 et une seconde surface d'intrados 48, les secondes surfaces d'extrados 47 et d'intrados 48 se rejoignant à une extrémité transversale 46 de la protubérance 4. Chaque protubérance 4 s'étend d'une part longitudinalement selon la direction longitudinale X d'une troisième zone extrémale 43 située côté moyeu 3 vers une quatrième zone extrémale 44 située côté pied de pale 25 et d'autre part transversalement selon la direction transversale Y du bord transversal 15,16 sur lequel est agencée la protubérance 4 vers l'extrémité transversale 46.

Les premières surfaces d'extrados 17 et d'intrados 18 de l'enveloppe aérodynamique épaisse 1 et les secondes surfaces d'extrados 47 et d'intrados 48 de chaque protubérance 4 forment une même enveloppe.

Un second profil 41 de chaque protubérance 4 est défini dans chaque plan parallèle au plan transversal Pyz par :
- une hauteur *h'* égale à une distance entre la seconde surface d'extrados 47 et la seconde surface d'intrados 48 selon la direction d'élévation Z, la hauteur *h'* étant comprise entre 0.2 et 0.6 fois l'épaisseur *h* de l'enveloppe aérodynamique épaisse 1,
- une largeur *l*' égale à une distance entre le bord transversal 15,16 sur lequel est agencée la protubérance 4 et l'extrémité transversale 46 de la protubérance 4 selon la direction transversale Y, la largeur *l*' étant comprise entre 0.5 et 2 fois la hauteur *h'* de la protubérance 4,
- des rayons de raccordement non nuls, par exemple supérieurs ou égaux à 25% de la hauteur *h'* de la protubérance 4, entre d'une part la première surface d'extrados 17 et la seconde surface d'extrados 47 et d'autre part la première surface d'intrados 18 et la seconde surface d'intrados 48, et
- un rayon de courbure de l'extrémité transversale 46 entre la seconde surface d'extrados 47 et la seconde surface d'intrados 48 supérieur à un rayon minimum *Rₘᵢₙᵢ*, qui est par exemple supérieur ou égal à 15% de la hauteur h' de la protubérance 4.

La protubérance 4 a par exemple, comme représentée sur les figures 6 et 8, un second profil 41 de forme gaussienne avec une base large et une extrémité transversale 46 affinée.

La protubérance 4 est définie également par une seconde longueur *L'* égale à une distance entre la troisième zone extrémale 43 et la quatrième zone extrémale 44 selon la direction longitudinale X, la seconde longueur *L'* étant comprise entre 0.5 et une fois la première longueur *L* de l'enveloppe aérodynamique épaisse 1.

La présence de cette protubérance 4 permet avantageusement d'améliorer le comportement aérodynamique de l'enveloppe aérodynamique épaisse 1 lors de la rotation du rotor 10, aussi bien pour une enveloppe aérodynamique épaisse 1 avançante que reculante, d'une part en réduisant la traînée aérodynamique et la production d'un sillage et d'autre part en limitant l'amplitude des instationnarités contenues dans ce sillage et la signature fréquentielle de ce sillage.

La protubérance 4 a une forme s'amincissant depuis le bord transversal 15,16 sur lequel est agencée la protubérance 4 vers l'extrémité transversale 46. De fait, la hauteur *h'*, qui est une distance maximale entre la seconde surface d'extrados 47 et la seconde surface d'intrados 48 selon la direction d'élévation Z, est définie par deux points de jonction A,B, le premier point de jonction A étant le point d'intersection entre la première surface d'extrados 17 et la seconde surface d'extrados 47, le second point de jonction B étant le point d'intersection entre la première surface d'intrados 18 et la seconde surface d'intrados 48 comme représenté sur les figures 6 et 7.

Par ailleurs, la seconde surface d'extrados 47 et la seconde surface d'intrados 48 comportent un point d'inflexion entre chaque point de jonction A,B et l'extrémité transversale 46 afin de permettre un écoulement continu du flux d'air et sans rencontrer d'arête vive. De la sorte, l'enveloppe aérodynamique épaisse 1 selon l'invention limite également l'apparition de turbulences sur ce flux d'air le balayant.

Selon les figures 5 à 7, une protubérance 4 est agencée sur le bord de fuite 17 de l'enveloppe aérodynamique épaisse 1. Selon la figure 8, deux protubérances 4,4' sont agencées sur l'enveloppe aérodynamique épaisse 1, une première protubérance 4 étant agencée sur le bord de fuite 16 et une deuxième protubérance 4' étant agencée sur le bord d'attaque 15. Toutefois, une protubérance 4 peut être agencée uniquement sur le bord d'attaque 17 d'une enveloppe aérodynamique épaisse 1.

L'enveloppe aérodynamique épaisse 1 représentée sur les figures est une enveloppe aérodynamique épaisse longue, mais une protubérance 4 peut également être agencée au bord d'attaque 15 et/ou au bord de fuite 16 d'une enveloppe aérodynamique épaisse 1 courte.

Sur les figures 2, 3 et 5, on peut constater que la seconde longueur *L'* de la protubérance 4 est strictement inférieure à la première longueur *L* de l'enveloppe aérodynamique épaisse 1. Dès lors, afin de permettre un raccordement progressif entre l'extrémité transversale 46 de la protubérance 4 et chaque première surface d'extrados 17 et d'intrados 18, l'enveloppe aérodynamique épaisse 1 comporte deux zones de raccordement 45,49 agencées respectivement à partir des troisième et quatrième zones extrémales 43,44 vers le premier revêtement extérieur 12. Chaque zone de raccordement 45,49 comporte des rayons de raccordement non nuls et une pente afin de raccorder progressivement l'extrémité transversale 46 à chaque première surface d'extrados 17 et d'intrados 18 au niveau de la troisième zone extrémale 43 côté moyeu 3 et au niveau de la quatrième zone extrémale 44 côté pied de pale 25.

Par ailleurs, sur les figures 6 et 8, chaque protubérance 4 est symétrique par rapport à la direction transversale Y, la protubérance 4 étant agencée sensiblement perpendiculairement au bord de fuite 16 et, dans le cas de la figure 8, la protubérance 4' étant agencée sensiblement perpendiculairement au bord d'attaque 15.

Sur la figure 7, la protubérance 4 est inclinée par rapport à la direction transversale Y et est agencée de sorte à ne pas être perpendiculaire au bord de fuite 16. Cette protubérance 4 ne comporte de fait pas d'axe de symétrie.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

Par exemple, une enveloppe aérodynamique épaisse 1 équipé d'une ou plusieurs protubérances 4 peut être agencé sur un rotor auxiliaire anticouple d'un aéronef à voilure tournante ou bien sur un rotor de propulsion équipant un aéronef.

Il est bien sûr envisageable de remplacer un moyen décrit par un moyen équivalent sans sortir du cadre de la présente invention.

## Revendications

1. Enveloppe aérodynamique épaisse (1) destinée à être reliée à un moyeu (3) tournant d'un aéronef (5), ladite enveloppe aérodynamique épaisse (1) s'étendant d'une part selon une direction longitudinale (X) en envergure d'une première zone extrémale (13) à une seconde zone extrémale (14) et d'autre part selon une direction transversale (Y) entre deux bords transversaux (15,16), lesdits deux bords transversaux (15,16) étant un bord d'attaque (15) et un bord de fuite (16), ladite enveloppe aérodynamique épaisse (1) comportant une première surface d'extrados (17) et une première surface d'intrados (18), ladite enveloppe aérodynamique épaisse (1) étant définie par une première longueur *L* égale à une distance entre ladite première zone extrémale (13) et ladite seconde zone extrémale (14) selon ladite direction longitudinale (X),
ladite enveloppe aérodynamique épaisse (1) étant formée par une succession de premiers profils (11) situés dans des plans parallèles à un plan transversal (Pyz) perpendiculaire à ladite direction longitudinale (X) en envergure, chaque premier profil (11) étant défini dans un plan parallèle audit plan transversal (Pyz) par une épaisseur *h* égale à une distance maximale entre ladite première surface d'extrados (17) et ladite première surface d'intrados (18),
**caractérisée en ce que** ladite enveloppe aérodynamique épaisse (1) comporte au moins une protubérance (4) agencée sur au moins un desdits bords transversaux (15,16), chaque protubérance (4) étant solidaire de ladite enveloppe aérodynamique épaisse (1), chaque protubérance (4) comportant une seconde surface d'extrados (47) et une seconde surface d'intrados (48), chaque protubérance (4) s'étendant transversalement dudit bord transversal (15,16) sur lequel ladite protubérance (4) est agencée, à une extrémité transversale (46) de ladite protubérance (4) où se rejoignent ladite seconde surface d'extrados (47) et ladite seconde surface d'intrados (48), chaque protubérance (4) étant configurée afin d'améliorer le comportement aérodynamique de ladite enveloppe aérodynamique épaisse (1) aussi bien lorsque ladite enveloppe aérodynamique épaisse (1) impacte un flux d'air avec ledit bord d'attaque (15) qu'avec ledit bord de fuite (16), chaque protubérance (4) étant définie par une seconde longueur *L'* égale à une distance entre une troisième zone extrémale (43) et une quatrième zone extrémale (44) de ladite protubérance (4) selon ladite direction longitudinale (X), ladite seconde longueur *L'* étant comprise entre 0.5 et une fois ladite première longueur *L* de ladite enveloppe aérodynamique épaisse (1), chaque protubérance (4) étant formée par une succession de seconds profils (41) situés dans des plans parallèles audit plan transversal (Pyz), chaque second profil (41) étant défini par :
- une hauteur *h'* égale à une distance entre ladite seconde surface d'extrados (47) et ladite seconde surface d'intrados (48), ladite hauteur *h'* étant comprise entre 0.2 et 0.6 fois ladite épaisseur *h* de ladite enveloppe aérodynamique épaisse (1),
- une largeur *l*' égale à une distance entre ledit premier profil (11) et ladite extrémité transversale (46) selon ladite direction transversale (Y), ladite largeur *l*' étant égale à 0.5 à 2 fois ladite hauteur *h'*,
- des rayons de raccordement non nuls entre ledit premier profil (11) et ledit second profil (41), et
- un rayon de courbure de ladite extrémité transversale (46) de ladite protubérance (4) entre ladite seconde surface d'extrados (47) et ladite seconde surface d'intrados (48) supérieur à un rayon minimum *Rₘᵢₙᵢ*.

2. Enveloppe aérodynamique épaisse (1) selon la revendication 1,
**caractérisée en ce que** ladite enveloppe aérodynamique épaisse (1) et chaque protubérance (4) forment une pièce unique de sorte que lesdites premières surfaces d'extrados (17) et d'intrados (18) et lesdites secondes surfaces d'extrados (47) et d'intrados (48) forment une seule et même enveloppe.

3. Enveloppe aérodynamique épaisse (1) selon la revendication 1,
**caractérisée en ce que** chaque protubérance (4) est un élément rapporté sur ladite enveloppe aérodynamique épaisse (1).

4. Enveloppe aérodynamique épaisse (1) selon l'une quelconque des revendications 1 à 3,
**caractérisée en ce que** ladite seconde surface d'extrados (47) et ladite seconde surface d'intrados (48) comportent un point d'inflexion.

5. Enveloppe aérodynamique épaisse (1) selon l'une quelconque des revendications 1 à 4,
**caractérisée en ce que** lesdits rayons de raccordement entre d'une part ladite première surface d'extrados (17) et ladite seconde surface d'extrados (47) et d'autre part ladite première surface d'intrados (18) et ladite seconde surface d'intrados (48) sont supérieurs ou égaux à 25% de ladite hauteur *h'* de ladite protubérance (4) et sont configurés de sorte qu'un raccordement continu en tangence existe entre d'une part ladite première surface d'extrados (17) et ladite seconde surface d'extrados (47) et d'autre part ladite première surface d'intrados (18) et ladite seconde surface d'intrados (48).

6. Enveloppe aérodynamique épaisse (1) selon l'une quelconque des revendications 1 à 5,
**caractérisée en ce que** ledit rayon minimum *Rₘᵢₙᵢ* est supérieur ou égal à 15% de ladite hauteur *h*' de ladite protubérance (4).

7. Enveloppe aérodynamique épaisse (1) selon l'une quelconque des revendications 1 à 6,
**caractérisée en ce que**, dans chaque plan perpendiculaire à la direction longitudinale (X), chaque second profil (41) de chaque protubérance (4) est agencé perpendiculairement à une droite reliant les deux points d'intersection entre ledit premier profil (11) de ladite enveloppe aérodynamique épaisse (1) et ledit second profil (41) de ladite protubérance (4).

8. Enveloppe aérodynamique épaisse (1) selon l'une quelconque des revendications 1 à 6,
**caractérisée en ce que**, dans chaque plan perpendiculaire à ladite direction longitudinale (X), chaque second profil (41) de chaque protubérance (4) est agencé de sorte à ne pas être perpendiculaire à une droite reliant les deux points d'intersection entre ledit premier profil (11) de ladite enveloppe aérodynamique épaisse (1) et ledit second profil (41) de ladite protubérance (4).

9. Enveloppe aérodynamique épaisse (1) selon l'une quelconque des revendications 1 à 8,
**caractérisée en ce que**, dans chaque plan parallèle audit plan transversal (Pyz), ledit second profil (41) de chaque protubérance (4) comporte un axe de symétrie.

10. Enveloppe aérodynamique épaisse (1) selon l'une quelconque des revendications 1 à 9,
**caractérisée en ce qu'**une corde *l* de ladite enveloppe aérodynamique épaisse (1) étant égale à une distance maximale entre ledit bord d'attaque (15) et ledit bord de fuite (16), une épaisseur relative de ladite enveloppe aérodynamique épaisse (1) égale à un rapport de ladite épaisseur *h* par ladite corde *l* est comprise entre 40% et 100%.

11. Enveloppe aérodynamique épaisse (1) selon l'une quelconque des revendications 1 à 10,
**caractérisée en ce que** ladite largeur *l*' est variable selon une loi de variation en envergure selon ladite direction longitudinale X.

12. Enveloppe aérodynamique épaisse (1) selon l'une quelconque des revendications 1 à 11,
**caractérisée en ce que** ladite hauteur *h'* est variable selon une loi de variation en envergure selon ladite direction longitudinale X.

13. Enveloppe aérodynamique épaisse (1) selon l'une quelconque des revendications 1 à 12,
**caractérisée en ce qu'**une protubérance (4) est agencée sur ledit bord de fuite (16) de la dite enveloppe aérodynamique épaisse (1).

14. Rotor (10) d'un aéronef (5), ledit rotor (10) comportant un moyeu (3), au moins deux pales (2) et des enveloppes aérodynamiques épaisses (1), chaque enveloppe aérodynamique épaisse (1) reliant respectivement une pale (2) audit moyeu (3),
**caractérisé en ce que** chaque enveloppe aérodynamique épaisse (1) est selon l'une quelconque des revendications 1 à 13, chaque protubérance (4) étant configurée de sorte à réduire la production d'un sillage dudit rotor (10) et à limiter l'amplitude des instationnarités contenues dans ledit sillage, ainsi qu'à réduire une signature fréquentielle dudit sillage.

15. Aéronef (5) à voilure tournante comportant un fuselage (51), une poutre de queue (52), au moins un empennage vertical (54) et au moins un rotor (10) muni d'au moins deux pales (2),
**caractérisé en ce que** ledit rotor (10) est selon la revendication 14, chaque protubérance (4) étant configurée de sorte d'une part à réduire la production d'un sillage dudit rotor (10) et les instationnarités dudit sillage et d'autre part à limiter l'apparition de vibrations de ladite poutre de queue (52) et/ou dudit empennage vertical (54) générées par ledit sillage.

## Patentansprüche

1. Dicke aerodynamische Hülle (1), die vorgesehen ist, um mit einer rotierenden Nabe (3) eines Luftfahrzeugs (5) verbunden zu werden, wobei sich die dicke aerodynamische Hülle (1) einerseits in einer Längsrichtung (X) in der Spannweite von einer ersten Endzone (13) zu einer zweiten Endzone (14) und andererseits in einer Querrichtung (Y) zwischen zwei Querkanten (15, 16) erstreckt, wobei die beiden Querkanten (15, 16) eine Vorderkante (15) und eine Hinterkante (16) sind, wobei die dicke aerodynamische Hülle (1) eine erste obere Oberfläche (17) und eine erste untere Oberfläche (18) umfasst, wobei die dicke aerodynamische Hülle (1) durch eine erste Länge L definiert ist, die gleich einem Abstand zwischen der ersten Endzone (13) und der zweiten Endzone (14) in der Längsrichtung (X) ist,
die dicke aerodynamische Hülle (1) durch eine Abfolge von ersten Profilen (11) gebildet ist, die in Ebenen parallel zu einer zu der Längsrichtung (X) in der Spannweite senkrechten Querebene (Pyz) angeordnet sind, wobei jedes erste Profil (11) in einer zu der Querebene (Pyz) parallelen Ebene durch eine Dicke h gleich einem maximalen Abstand zwischen der ersten oberen Oberfläche (17) und der ersten unteren Oberfläche (18) definiert ist,
**dadurch gekennzeichnet, dass** die dicke aerodynamische Hülle (1) mindestens einen Vorsprung (4) aufweist, der an mindestens einer der Querkanten (15, 16) angeordnet ist, wobei jeder Vorsprung (4) fest mit der dicken aerodynamischen Hülle (1) verbunden ist, wobei jeder Vorsprung (4) eine zweite obere Oberfläche (47) und eine zweite untere Oberfläche (48) aufweist, wobei sich jeder Vorsprung (4) quer zu der Querkante (15, 16), auf der der Vorsprung (4) angeordnet ist, bis zu einem Querende (46) des Vorsprungs (4) erstreckt, an dem die zweite obere Oberfläche (47) und die zweite untere Oberfläche (48) aufeinandertreffen, wobei jeder Vorsprung (4) konfiguriert ist, um das aerodynamische Verhalten der dicken aerodynamischen Hülle (1) sowohl dann zu verbessern, wenn die dicke aerodynamische Hülle (1) mit der Vorderkante (15) auf einen Luftstrom trifft, auch, wenn sie ihn mit der Hinterkante (16) trifft, wobei jeder Vorsprung (4) durch eine zweite Länge L' definiert ist, die gleich einem Abstand zwischen einer dritten Endzone (43) und einer vierten Endzone (44) des Vorsprungs (4) in der Längsrichtung (X) ist, wobei die zweite Länge L' zwischen dem 0,5-fachen und dem Einfachen der ersten Länge L der dicken aerodynamischen Hülle (1) liegt, wobei jeder Vorsprung (4) durch eine Folge von zweiten Profilen (41) gebildet ist, die in Ebenen parallel zu der Querebene (Pyz) angeordnet sind, wobei jedes zweite Profil (41) definiert ist durch :
- eine Höhe h', die gleich einem Abstand zwischen der zweiten oberen Oberfläche (47) und der zweiten unteren Oberfläche (48) ist, wobei die Höhe h' zwischen dem 0,2- und 0,6-fachen der Dicke h der dicken aerodynamischen Hülle (1) liegt,
- eine Breite l', die gleich einem Abstand zwischen dem ersten Profil (11) und dem Querende (46) in der Querrichtung (Y) ist; wobei die Breite l' gleich dem 0,5- bis 2-fachen der Höhe h' ist,
- nichtverschwindende Verbindungsradien zwischen dem ersten Profil (11) und dem zweiten Profil (41), und
- einen Krümmungsradius des Querendes (46) des Vorsprungs (4) zwischen der zweiten oberen Oberfläche (47) und der zweiten unteren Oberfläche (48), der größer als ein Mindestradius Rₘᵢₙᵢ ist.

2. Dicke aerodynamische Hülle (1) nach Anspruch 1,
**dadurch gekennzeichnet, dass** die dicke aerodynamische Hülle (1) und jeder Vorsprung (4) ein einziges Teil bilden, so dass die erste obere Oberfläche (17) und die untere Oberfläche (18) und die zweite obere Oberfläche (47) und die untere Oberfläche (48) eine einzige und gleiche Hülle bilden.

3. Dicke aerodynamische Hülle (1) nach Anspruch 1,
**dadurch gekennzeichnet, dass** jeder Vorsprung (4) ein Element ist, das an die dicke aerodynamische Hülle (1) angefügt ist.

4. Dicke aerodynamische Hülle (1) nach einem der Ansprüche 1 bis 3,
**dadurch gekennzeichnet, dass** die zweite obere Oberfläche (47) und die zweite untere Oberfläche (48) einen Wendepunkt aufweisen.

5. Dicke aerodynamische Hülle (1) nach einem der Ansprüche 1 bis 4,
**dadurch gekennzeichnet, dass** die Verbindungsradien einerseits zwischen der ersten oberen Oberfläche (17) und der zweiten oberen Oberfläche (47) und andererseits zwischen der ersten unteren Oberfläche (18) und der zweiten unteren Oberfläche (48) größer oder gleich 25% der Höhe h' des Vorsprungs (4) sind und so konfiguriert sind, dass eine kontinuierliche tangentiale Verbindung zwischen der ersten oberen Oberfläche (17) und der zweiten oberen Oberfläche (47) einerseits und der ersten unteren Oberfläche (18) und der zweiten unteren Oberfläche (48) andererseits besteht.

6. Dicke aerodynamische Hülle (1) nach einem der Ansprüche 1 bis 5,
**dadurch gekennzeichnet, dass** der minimale Radius Rₘᵢₙᵢ größer oder gleich 15% der Höhe h' des Vorsprungs (4) ist.

7. Dicke aerodynamische Hülle (1) nach einem der Ansprüche 1 bis 6,
**dadurch gekennzeichnet, dass** in jeder Ebene senkrecht zur Längsrichtung (X) jedes zweite Profil (41) jedes Vorsprungs (4) senkrecht zu einer Geraden angeordnet ist, die die beiden Schnittpunkte zwischen dem ersten Profil (11) der dicken aerodynamischen Hülle (1) und dem zweiten Profil (41) des Vorsprungs (4) verbindet.

8. Dicke aerodynamische Hülle (1) nach einem der Ansprüche 1 bis 6,
**dadurch gekennzeichnet, dass** in jeder zu der Längsrichtung (X) senkrechten Ebene jedes zweite Profil (41) jedes Vorsprungs (4) so angeordnet ist, dass es nicht senkrecht zu einer Geraden ist, die die beiden Schnittpunkte zwischen dem ersten Profil (11) der dicken aerodynamischen Hülle (1) und dem zweiten Profil (41) des Vorsprungs (4) verbindet.

9. Dicke aerodynamische Hülle (1) nach einem der Ansprüche 1 bis 8,
**dadurch gekennzeichnet, dass** das zweite Profil (41) jedes Vorsprungs (4) in jeder zu der Querebene (Pyz) parallelen Ebene eine Symmetrieachse aufweist.

10. Dicke aerodynamische Hülle (1) nach einem der Ansprüche 1 bis 9,
**dadurch gekennzeichnet, dass** eine Sehne 1 der dicken aerodynamischen Hülle (1) gleich einem maximalen Abstand zwischen der Vorderkante (15) und der Hinterkante (16) ist, und dass eine relative Dicke der dicken aerodynamischen Hülle (1), die gleich einem Verhältnis der Dicke h zu der Sehne I ist, zwischen 40% und 100% liegt.

11. Dicke aerodynamische Hülle (1) nach einem der Ansprüche 1 bis 10,
**dadurch gekennzeichnet, dass** die Breite l' in der Längsrichtung X gemäß einer Regel der Spannweitenveränderung variabel ist.

12. Dicke aerodynamische Hülle (1) nach einem der Ansprüche 1 bis 11,
**dadurch gekennzeichnet, dass** die Höhe h' in der Längsrichtung X gemäß einer Regel der Spannweitenveränderung variabel ist.

13. Dicke aerodynamische Hülle (1) nach einem der Ansprüche 1 bis 12,
**dadurch gekennzeichnet, dass** ein Vorsprung (4) an der Hinterkante (16) der dicken aerodynamischen Hülle (1) angeordnet ist.

14. Rotor (10) eines Luftfahrzeugs (5), wobei der Rotor (10) eine Nabe (3), mindestens zwei Blätter (2) und dicke aerodynamische Hüllen (1) umfasst, wobei jede dicke aerodynamische Hülle (1) jeweils ein Blatt (2) mit der Nabe (3) verbindet,
**dadurch gekennzeichnet, dass** jede dicke aerodynamische Hülle (1) nach einem der Ansprüche 1 bis 13 ist, und dass jeder Vorsprung (4) konfiguriert ist, um die Erzeugung einer Wirbelschleppe des Rotors (10) zu reduzieren und die Amplitude der in der Wirbelschleppe enthaltenen Instabilitäten zu begrenzen sowie eine Frequenzsignatur der Wirbelschleppe zu reduzieren.

15. Drehflügel-Luftfahrzeug (5) mit einem Rumpf (51), einem Heckausleger (52), mindestens einem Seitenleitwerk (54) und mindestens einem Rotor (10) mit mindestens zwei Blättern (2), **dadurch gekennzeichnet, dass** der Rotor (10) nach Anspruch 14 ist, und dass jeder Vorsprung (4) konfiguriert ist, um einerseits die Erzeugung einer Wirbelschleppe des Rotors (10) und die Instabilitäten der Wirbelschleppe zu reduzieren und andererseits das Auftreten von durch die Wirbelschleppe erzeugten Vibrationen des Heckauslegers (52) und/oder des Seitenleitwerks (54) zu begrenzen.

## Claims

1. Sleeve (1) designed to be connected to a rotary hub (3) of an aircraft (5), said sleeve (1) in span extending, on one hand, in a longitudinal direction (X) in span from a first extreme zone (13) to a second extreme zone (14) and, on the other hand, in a transverse direction (Y) between two transverse edges (15, 16), said two transverse edges (15, 16) being a leading edge (15) and a trailing edge (16), said sleeve (1) comprising a first upper surface (17) and a first lower surface (18), said sleeve (1) being defined by a first length L equal to a distance between said first extreme zone (13) and said second extreme zone (14) in said longitudinal direction (X),
said sleeve (1) being formed by a succession of first profiles (11) located in planes parallel to a transverse plane (Pyz) perpendicular to said longitudinal direction (X) in span, each first profile (11) being defined in a plane parallel to said transverse plane (Pyz) by a thickness h equal to a maximum distance between said first upper surface (17) and said first lower surface (18),
**characterised in that** said sleeve (1) includes at least one protuberance (4) arranged on at least one of said transverse edges (15, 16), each protuberance (4) being integral with said sleeve (1), each protuberance (4) including a second upper surface (47) and a second lower surface (48), each protuberance (4) extending transversely from said transverse edge (15, 16) on which said protuberance (4) is arranged, to a transverse end (46) of said protuberance (4) where said second upper surface (47) and said second lower surface (48) meet, each protuberance (4) being configured so as to improve the aerodynamic behaviour of said sleeve (1) both when said sleeve (1) impacts an air flow with said leading edge (15) and with said trailing edge (16), each protuberance (4) being defined by a second length *L'* equal to a distance between a third extreme zone (43) and a fourth extreme zone (44) of said protuberance (4) in said longitudinal direction (X), said second length *L'* being comprised between 0.5 and 1 times said first length *L* of said sleeve (1), each protuberance (4) being formed by a succession of second profiles (41) located in planes parallel to said transverse plane (Pyz), each second profile (41) being defined by:
- a height *h'* equal to a distance between said second upper surface (47) and said second lower surface (48), said height *h'* being comprised between 0.2 and 0.6 times said thickness *h* of said sleeve (1),
- a width *l*'equal to a distance between said first profile (11) and said transverse end (46) in said transverse direction (Y), said width *l*' being equal to 0.5 to 2 times said height *h'*,
- non-zero connecting radii between said first profile (11) and said second profile (41), and
- a radius of curvature of said transverse end (46) of said protuberance (4) between said second upper surface (47) and said second lower surface (48) greater than a minimum radius *Rₘᵢₙᵢ.*

2. Sleeve (1) according to claim 1,
**characterised in that** said sleeve (1) and each protuberance (4) form a single piece such that said first upper (17) and lower (18) surfaces and said second upper (47) and lower (48) surfaces form one and the same sleeve.

3. Sleeve (1) according to claim 1,
**characterised in that** each protuberance (4) is a fitted element on said sleeve (1).

4. Sleeve (1) according to any one of claims 1 to 3,
**characterised in that** said second upper surface (47) and said second lower surface (48) include an inflexion point.

5. Sleeve (1) according to any one of claims 1 to 4,
**characterised in that** said connecting radii between, on one hand, said first upper surface (17) and said second upper surface (47) and, on the other hand, said first lower surface (18) and said second lower surface (48) are greater than or equal to 25% of said height h' of said protuberance (4) and are configured such that a continuous tangential connection exists between, on one hand, said first upper surface (17) and said second upper surface (47) and, on the other hand, said first lower surface (18) and said second lower surface (48).

6. Sleeve (1) according to any one of claims 1 to 5,
**characterised in that** said minimum radius Rₘᵢₙᵢ is greater than or equal to 15% of said height *h'* of said protuberance (4).

7. Sleeve (1) according to any one of claims 1 to 6,
**characterised in that**, in each plane perpendicular to the longitudinal direction (X), each second profile (41) of each protuberance (4) is arranged perpendicularly to a straight line connecting the two points of intersection between said first profile (11) of said sleeve (1) and said second profile (41) of said protuberance (4).

8. Sleeve (1) according to any one of claims 1 to 6,
**characterised in that**, in each plane perpendicular to said longitudinal direction (X), each second profile (41) of each protuberance (4) is arranged so as not to be perpendicular to a straight line connecting the two points of intersection between said first profile (11) of said sleeve (1) and said second profile (41) of said protuberance (4).

9. Sleeve (1) according to any one of claims 1 to 8,
**characterised in that**, in each plane parallel to said transverse plane (Pyz), said second profile (41) of each protuberance (4) includes an axis of symmetry.

10. Sleeve (1) according to any one of claims 1 to 9,
**characterised in that** a chord *l* of said sleeve (1) being equal to a maximum distance between said leading edge (15) and said trailing edge (16), a relative thickness of said sleeve (1) equal to a ratio of said thickness *h* to said chord *l* is between 40% and 100%.

11. Sleeve (1) according to any one of claims 1 to 10,
**characterised in that** said width *l'* is variable according to a law of variation in span in said longitudinal direction X.

12. Sleeve (1) according to any one of claims 1 to 11,
**characterised in that** said height *h'* is variable according to a law of variation in span in said longitudinal direction X.

13. Sleeve (1) according to any one of claims 1 to 12,
**characterised in that** a protuberance (4) is arranged on said trailing edge (16) of said sleeve (1).

14. Rotor (10) of an aircraft (5), said rotor (10) comprising a hub (3), at least two blades (2) and sleeves (1), each sleeve (1) respectively connecting a blade (2) to said hub (3),
**characterised in that** each sleeve (1) is according to any one of claims 1 to 13, each protuberance (4) being configured so as to reduce the production of a wake of said rotor (10) and to limit the amplitude of instabilities contained in said wake, thereby reducing a frequency signature of said wake.

15. Rotary wing aircraft (5) comprising a fuselage (51), a tail boom (52), at least one vertical empennage (54) and at least one rotor (10) provided with at least two blades (2),
**characterised in that** said rotor (10) is according to claim 14, each protuberance (4) being configured so as, on one hand, to reduce the production of a wake of said rotor (10) and the instabilities of said wake and, on the other hand, to limit the appearance of vibration of said tail boom (52) and/or of said vertical empennage (54) generated by said wake.
